# FASCICULE DE BREVET EUROPEEN

(11) **EP 2 536 316 B1**
(45) Date de publication et mention de la délivrance du brevet: **25.06.2014**
(21) Numéro de dépôt: 11709027.4
(22) Date de dépôt: 15.02.2011
(51) Int. Cl.: A47J 27/122, A47J 27/04

(54) **PANIER POUR APPAREIL ELECTRIQUE DE CHAUFFAGE D'ALIMENTS A LA VAPEUR OU POUR USTENSILE DE CUISSON**
KORB FÜR EIN ELEKTRISCHES GERÄT ZUM DAMPFGAREN VON SPEISEN ODER FÜR EIN KOCHUTENSIL
BASKET FOR AN ELECTRICAL APPLIANCE FOR STEAM-HEATING FOOD OR FOR A COOKING UTENSIL

(30) Priorité: 16.02.2010 FR 1051087
(43) Date de publication de la demande: 26.12.2012
(73) Titulaire: SEB S.A., 69130 Ecully (FR)
(72) Inventeur: PERRIER, Matthieu, F-26000 Valence (FR)
(74) Mandataire: Cémeli, Eric Philippe Laurent
(86) Numéro de dépôt international: PCT/EP2011/052171
(87) Numéro de publication internationale: WO 2011/101324

(56) Documents cités:
- FR-A1- 2 846 215

## Description

La présente invention se rapporte à un panier pour un appareil électrique de chauffage d'aliments à la vapeur ou pour tout ustensile de cuisson.

La présente invention porte aussi sur un appareil électrique de chauffage d'aliments à la vapeur et sur un ustensile de cuisson comprenant un tel panier.

La présente invention est notamment particulièrement adaptée à une yaourtière ménagère.

Le document FR2846215 décrit un appareil de cuisson à la vapeur comprenant un accessoire de cuisson comprenant plusieurs ouvertures pour recevoir des ramequins, retenus dans ces ouvertures par des rebords appropriés agencés dans leur partie supérieure. Cet accessoire comprend des perforations, qui représentent moins de 7% de sa surface, pour permettre le passage d'une partie de la vapeur provenant du fond de l'appareil de cuisson au-dessus de l'accessoire, lorsqu'il est disposé dans l'appareil de cuisson. Une telle solution entraîne la cuisson des ramequins essentiellement par le bas, où se trouve la grande majorité de la vapeur, et exige des ramequins particuliers comprenant un rebord dans leur partie haute. De plus, elle nécessite le remplissage préalable en eau de l'appareil de cuisson avant le positionnement de l'accessoire supportant les ramequins. Finalement, cet accessoire induit une séparation du volume de l'appareil de cuisson en deux zones supérieure et inférieure non homogènes puisqu'une très faible proportion de vapeur pénètre au-dessus des ramequins. Toutes ces caractéristiques de cette solution de l'état de la technique en font une solution non optimale pour la cuisson et le chauffage à la vapeur en général, notamment peu adaptée à la préparation de yaourts.

Ainsi, le but de l'invention est de fournir une solution de chauffage ou de cuisson à la vapeur améliorée par rapport aux solutions existantes.

Plus précisément, un premier objet de l'invention est de permettre le positionnement optimal des aliments à chauffer ou cuire au sein d'un appareil électrique de chauffage d'aliments à la vapeur ou d'un ustensile de cuisson.

Un second objet de l'invention est de permettre le remplissage en eau convivial et précis d'un appareil électrique de chauffage d'aliments à la vapeur ou d'un ustensile de cuisson.

Un troisième objet de l'invention est de permettre la manipulation conviviale des aliments à chauffer ou cuire.

A cet effet, l'invention repose sur un panier pour appareil électrique de chauffage d'aliments à la vapeur ou pour ustensile de cuisson, formant un support comprenant un organe de préhension central entouré par plusieurs emplacements prévus pour recevoir des réceptacles, du fait que l'organe de préhension central ménage un espace central de remplissage. L'espace central de remplissage permet de positionner le panier dans l'appareil ou dans l'ustensile avant le remplissage de l'eau et favorise la circulation de la vapeur au-dessus des réceptacles.

Avantageusement, pour faciliter le déplacement du panier, l'organe de préhension central est apte à la saisie du panier d'une seule main.

Avantageusement encore, pour faciliter la préhension, l'organe de préhension central comprend deux zones de préhension disposées de part et d'autre de l'espace central de remplissage.

Avantageusement alors, pour une préhension ergonomique, chacune des deux zones de préhension est accessible par une approche du côté des emplacements.

Avantageusement encore, pour faciliter le soulèvement de l'organe de préhension central, chacune des deux zones de préhension présente une surface inférieure de préhension.

Avantageusement encore, pour faciliter la saisie de l'organe de préhension central, chacune des deux zones de préhension présente une surface latérale de préhension.

Avantageusement encore, pour favoriser la préhension entre le pouce et les autres doigts, au moins une des deux zones de préhension présente un renfoncement creusé vers l'espace central de remplissage.

Selon une forme de réalisation avantageuse, le panier est allongé selon une direction transversale et les deux zones de préhension sont agencées de part et d'autre de l'espace central de remplissage selon ladite direction transversale.

Selon une forme de réalisation avantageuse, l'espace central de remplissage est apte au positionnement en son sein d'un récipient doseur d'eau.

Avantageusement, le panier est ajouré pour favoriser le passage de la vapeur entre l'espace central de remplissage et les emplacements prévus pour recevoir des réceptacles.

Avantageusement, pour favoriser l'échange thermique entre la vapeur et les réceptacles disposés dans les emplacements, les emplacements sont ajourés latéralement.

Selon une forme de réalisation avantageuse, les emplacements sont agencés symétriquement sur une zone annulaire autour de l'organe de préhension central.

L'invention repose aussi sur un appareil électrique de chauffage d'aliments à la vapeur ou sur un ustensile de cuisson comprenant un volume prévu pour le positionnement d'un panier selon l'une des caractéristiques précédentes.

Avantageusement alors, pour une meilleure efficacité, le volume prévu pour le positionnement du panier est surmonté par un couvercle principal.

Avantageusement encore, pour libérer l'espace sous le panier, le panier comporte des organes d'appui prévus pour reposer sur un rebord d'une paroi latérale du volume prévu pour le positionnement du panier.

Avantageusement encore, pour éviter les surchauffes dans un appareil électrique de chauffage d'aliments à la vapeur, le panier repose au-dessus et à distance d'un fond comportant un réservoir d'eau associé à un moyen chauffant.

Avantageusement alors, pour favoriser la circulation de la vapeur, le réservoir d'eau est formé par une dépression centrale du fond et le moyen chauffant est logé dans ladite dépression centrale.

Avantageusement alors, pour une diffusion plus homogène de la vapeur, les emplacements du panier sont disposés en périphérie du réservoir d'eau lorsque le panier est agencé dans ledit volume.

Avantageusement encore, pour limiter la quantité d'eau vaporisée par le moyen chauffant, la dépression centrale est entourée par une zone annulaire du fond séparée du réservoir d'eau par un seuil, ladite zone annulaire du fond présentant une inclinaison vers le bas en direction de la périphérie.

Selon une forme de réalisation, l'appareil électrique de chauffage d'aliments à la vapeur est une yaourtière ménagère.

Ces objets, caractéristiques et avantages de la présente invention seront exposés en détail dans la description suivante d'un mode d'exécution particulier fait à titre non-limitatif en relation avec les figures jointes parmi lesquelles :
- la figure 1 représente une vue en perspective d'un appareil électrique de chauffage d'aliments à la vapeur sans son couvercle principal, selon un mode d'exécution de l'invention,
- la figure 2 représente une vue en coupe selon un plan vertical de l'appareil illustré à la figure 1 avec son couvercle principal,
- la figure 3 représente une vue en perspective d'un panier de l'appareil illustré aux figures 1 et 2, ledit panier supportant différents pots,
- la figure 4 représente une vue en perspective du panier illustré sur la figures 3, sans lesdits pots,
- la figure 5 représente une vue en perspective éclatée de l'appareil illustré aux figures 1 et 2.

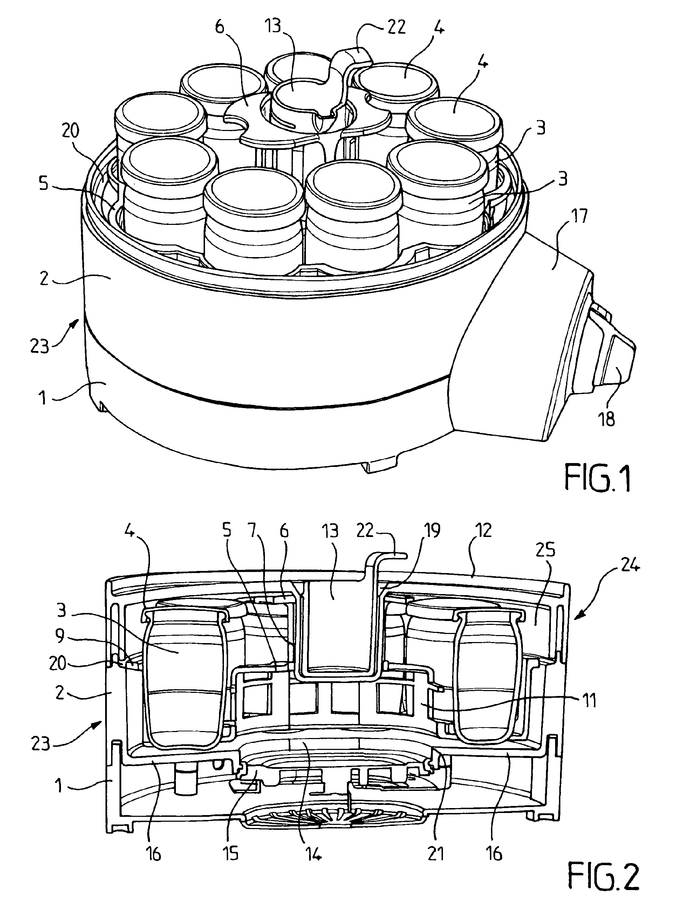

La figure 1 représente un appareil électrique de chauffage d'aliments à la vapeur selon un mode d'exécution de l'invention, dont le couvercle principal a été enlevé pour permettre la visualisation d'une partie de son volume intérieur. Cet appareil électrique de chauffage d'aliments à la vapeur est une yaourtière ménagère. Cet appareil électrique de chauffage d'aliments à la vapeur comprend un panier 5, qui sera décrit plus précisément ultérieurement.

Tel que représenté sur la figure 2, cet appareil électrique de chauffage d'aliments à la vapeur comprend un boîtier 24 formant une enceinte 25 associée à un moyen chauffant 15 et à un réservoir d'eau 14. Le moyen chauffant 15 est apte à évaporer l'eau contenue dans le réservoir d'eau 14 pour alimenter l'enceinte 25 en vapeur.

Le boîtier 24 comprend une base chauffante 23 formant un logement prévu pour recevoir des pots 3 destinés à recevoir une préparation à base de lait en vue de préparer des yaourts. La préparation à base de lait peut notamment comprendre du lait et des ferments lactiques, ou encore du lait et du yaourt. A cet effet la base chauffante 23 comprend une cuve 2. Chaque pot 3, de préférence en verre, est fermé par un couvercle 4 étanche qui peut se présenter sous la forme d'un capuchon plastique, en silicone par exemple, afin de supporter une température élevée. La base chauffante 23 comprend un socle 1 dans sa partie inférieure, surmonté par la cuve 2. Tel que visible sur les figures 1 et 2, la cuve 2 entoure au moins partiellement les pots 3. Le boîtier 24 comprend un couvercle principal 12. Le couvercle principal 12 est amovible et repose sur la base chauffante 23. La base chauffante 23 forme avec le couvercle principal 12 l'enceinte 25. L'enceinte 25 forme un volume prévu pour le positionnement du panier 5. Le volume prévu pour le positionnement du panier 5 est surmonté par le couvercle principal 12.

La figure 2 représente l'intérieur de l'appareil électrique de chauffage d'aliments à la vapeur par une coupe par un plan vertical, qui permet de visualiser le moyen chauffant 15 disposé dans la partie inférieure et centrale, au niveau du socle 1, et de visualiser le panier 5 portant les pots 3 dans le volume supérieur de l'appareil, formé par la cuve 2 surmontée par le couvercle principal 12. Le couvercle principal 12 est disposé en appui sur la paroi cylindrique latérale de la cuve 2 de manière à fermer totalement l'enceinte 25 en garantissant son étanchéité. Le couvercle principal 12 comprend de préférence une double paroi isolante pour limiter les pertes thermiques hors de l'appareil. La cuve 2 comprend de plus un fond 16, formant une frontière avec le socle 1, dans sa partie inférieure, qui sera détaillé par la suite.

De plus, le couvercle principal 12 présente un logement 19 formant un renfoncement central, c'est-à-dire une partie creuse dans sa zone centrale, qui pénètre à l'intérieur d'un volume central formant un espace central de remplissage 7 aménagé au sein d'un organe de préhension 6 central du panier 5, qui sera plus précisément décrit ci-après. Dans ce logement 19 central du couvercle principal 12 est disposé un récipient doseur 13 d'eau, dont la fonction sera explicitée par la suite. L'espace central de remplissage 7 est apte au positionnement en son sein du récipient doseur 13 d'eau. Tel que représenté sur la figure 1, le récipient doseur 13 d'eau est inséré dans l'espace central de remplissage 7 du panier 5.

Selon des caractéristiques optionnelles, tout ou partie de la cuve 2 pourrait être réalisée en matériau transparent, par exemple en plastique transparent, afin de permettre à un utilisateur de voir les pots 3 contenus dans l'appareil. Avantageusement, le couvercle principal 12 sera opaque pour empêcher de visualiser les gouttes d'eau apparaissant par condensation sur sa face intérieure lors du fonctionnement de l'appareil.

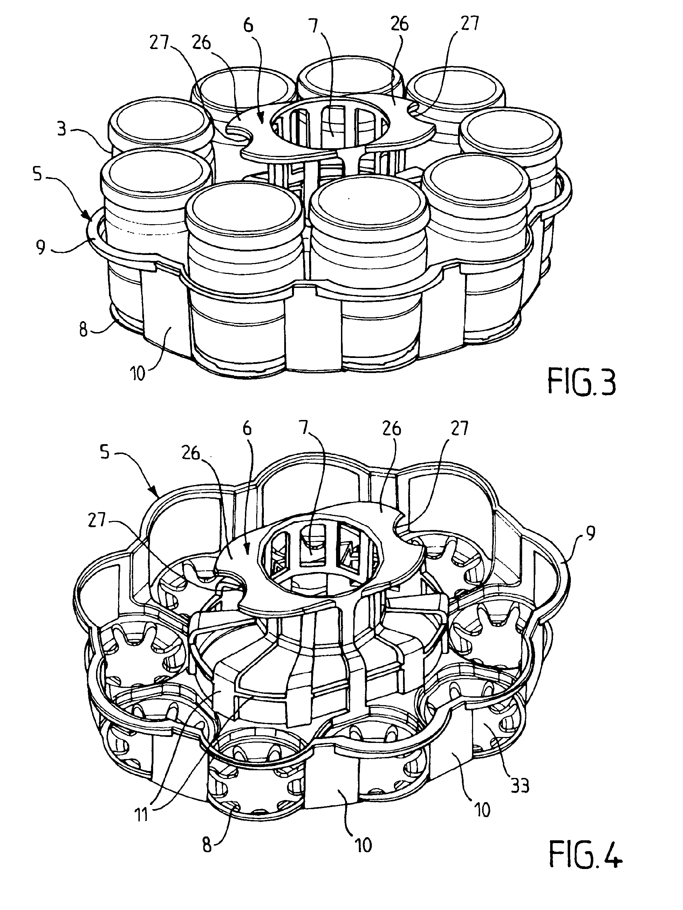

Les figures 3 et 4 représentent plus précisément le panier 5 formant un support pour recevoir les différents pots 3. Le panier 5 est allongé selon une direction transversale.

Tel que représenté sur la figure 4, le panier 5 forme un support comprenant l'organe de préhension 6 central entouré par plusieurs emplacements 33 prévus pour recevoir des réceptacles. Tel que représenté sur les figures 1, 2 et 3, les emplacements 33 reçoivent les pots 3. L'organe de préhension 6 central ménage l'espace central de remplissage 7. Plus particulièrement, l'organe de préhension central 6 délimite l'espace central de remplissage 7 au sein duquel se positionne la partie creuse du couvercle principal 12 formant le logement 19 pour ranger le récipient doseur 13 d'eau. L'organe de préhension 6 central est apte à la saisie du panier 5 d'une seule main et permet un transport aisé du panier 5, utile notamment pour transporter les pots 3 dans un réfrigérateur après la fabrication des yaourts.

Dans le mode d'exécution décrit, l'organe de préhension 6 central comprend deux zones de préhension 26 disposées de part et d'autre de l'espace central de remplissage 7. Ces deux zones de préhension 26 complémentaires sont symétriquement réparties de part et d'autre de l'espace central de remplissage 7. Ces deux zones de préhension 26 sont avantageusement orientées vers la périphérie du panier 5, de sorte d'être accessibles pour leur préhension par une approche depuis la périphérie vers le centre du panier 5. Ainsi chacune des deux zones de préhension 26 est accessible par une approche du côté des emplacements 33, comme cela sera précisé ci-dessous. Pour cela, chacune des deux zones de préhension 26 présente une surface inférieure de préhension et/ou chacune des deux zones de préhension 26 présente une surface latérale de préhension. De plus, au moins une des deux zones de préhension 26 présente un renfoncement 27 creusé vers l'espace central de remplissage 7, pour obtenir une forme ergonomique. Tel que représenté sur les figures, chacune des deux zones de préhension 26 présente un renfoncement 27 creusé vers l'espace central de remplissage 7. Enfin, les deux zones de préhension 26 sont agencées de part et d'autre de l'espace central de remplissage 7 selon la direction transversale dans laquelle le panier 5 est allongé. Naturellement, l'organe de préhension 6 pourrait en variante présenter une autre géométrie, par exemple en ne reprenant qu'une partie des caractéristiques précédentes. D'autre part, son positionnement peut varier légèrement de celui représenté. Toutefois, il reste suffisamment central pour permettre la manipulation du panier d'une seule main.

Tel que visible sur la figure 1, le panier illustré permet le positionnement de neuf pots 3, au sein des emplacements 33 mieux visibles sur la figure 3.

Tel que visible sur la figure 2, le logement 19 s'étend à l'intérieur du volume central formant l'espace central de remplissage 7 aménagé au sein de l'organe de préhension 6 central du panier 5. Le couvercle principal 12 présente ainsi un renfoncement central, c'est-à-dire une partie creuse dans sa zone centrale.

L'organe de préhension 6 central délimite l'espace central de remplissage 7 qui permet le versement de l'eau nécessaire au fonctionnement du cycle de fabrication des yaourts, jusqu'au réservoir d'eau 14, qui sera décrit ultérieurement. Cet espace central de remplissage 7, de forme sensiblement cylindrique, est de plus exploité pour recevoir le rangement du récipient doseur 13, comme cela a été décrit ci-dessus.

D'autre part, le panier 5 comprend différents emplacements 33 pour recevoir des pots 3, qui sont agencés symétriquement sur une zone annulaire autour de l'organe de préhension 6 central. Les emplacements 33 du panier 5 sont disposés en périphérie du réservoir d'eau 14 lorsque le panier 5 est agencé dans le volume défini par l'enceinte 25. Ces emplacements 33 sont volontairement ajourés latéralement pour faciliter l'écoulement de la vapeur autour des pots dans la phase de fabrication du yaourt, ce qui permet d'atteindre un chauffage efficace et homogène de la préparation contenue dans les pots 3. Pour cela, chaque emplacement 33 comprend des moyens extérieurs de retenue latérale 9, consistant en une fine bande en portion de cercle entourant la paroi extérieure de chaque pot 3. Ces moyens extérieurs de retenue latérale 9 sont reliés entre eux par des parois verticales 10 disposées entre les différents emplacements 33. Ainsi les emplacements 33 sont ajourés latéralement. Enfin, une paroi intérieure 11 ajourée, particulièrement visible sur la figure 4, remplit la fonction complémentaire de moyen de retenue intérieure des pots 3. Ainsi le panier 5 est ajouré pour favoriser le passage de la vapeur entre l'espace central de remplissage 7 et les emplacements 33. De plus, ces emplacements 33 comprennent un moyen de support inférieur 8 sur lequel reposent les pots 3, qui consiste en plusieurs crochets permettant de maintenir la base d'un pot, tout en libérant au moins un disque central largement ouvert, afin de permettre aussi le contact de la vapeur avec la base de chaque pot.

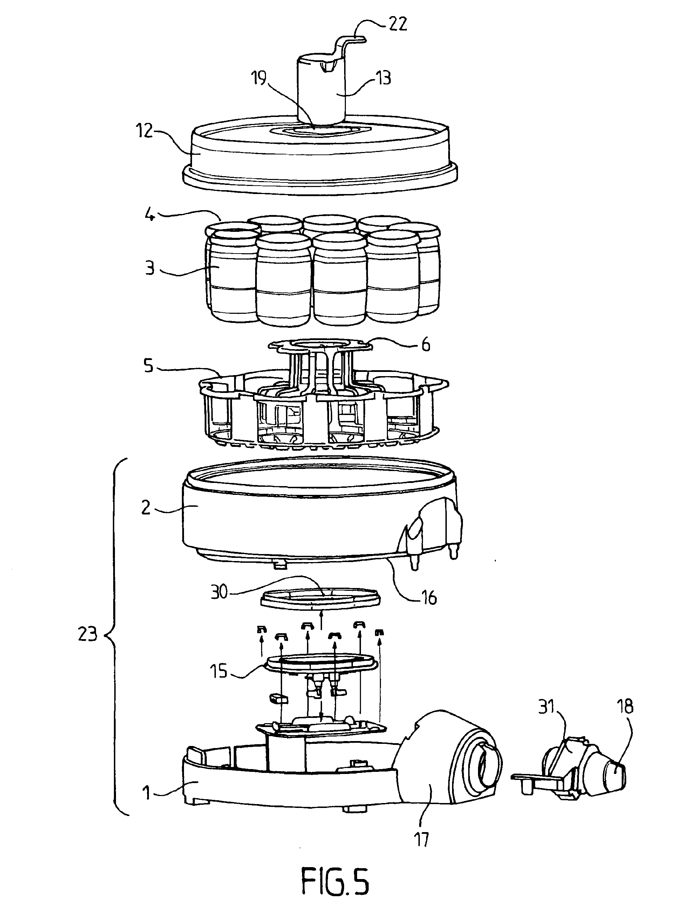

La figure 5 représente une vue éclatée en perspective de l'appareil, qui complète ainsi les illustrations précédentes. On y distingue le socle 1 auquel est relié un capot latéral 17 comprenant un dispositif de commande 31 du fonctionnement de l'appareil, notamment du moyen chauffant 15, incluant par exemple une minuterie pour gérer le temps de fonctionnement. Un bouton de sélection 18 associé au dispositif de commande 31 permet à un utilisateur la mise en route de l'appareil et éventuellement le choix parmi plusieurs modes de fonctionnement. Ainsi le capot latéral 17 et le bouton de sélection 18 appartiennent à la base chauffante 23.

Le moyen chauffant 15 consiste en une résistance chauffante annulaire formant un fond chauffant positionné dans une ouverture du fond 16 de la cuve 2. Un joint annulaire 30 est interposé entre le moyen chauffant 15 et l'ouverture du fond de la cuve 2.

Le réservoir d'eau 14 visible sur la figure 2 est formé par une légère dépression de faible volume du fond 16 de la cuve 2 au dessus du moyen chauffant 15, pour recevoir l'eau nécessaire au fonctionnement de l'appareil. Cette dépression qui comprend à la fois le moyen chauffant 15 et le volume remplissant la fonction de réservoir d'eau 14 se présente donc sous la forme d'une portion creuse agencée au fond de la cuve 2, se logeant ainsi au sein du volume délimité par le socle 1. Par ce biais, l'enceinte 25 logeant le panier 5 s'étend au-dessus du moyen chauffant 15 et du réservoir d'eau 14.

En remarque, ce logement 19 de la partie centrale du couvercle principal 12 vient ensuite dans l'espace central de remplissage 7 formé au niveau de l'organe central de préhension 6 du panier 5, ce qui permet d'obtenir une solution compacte, non encombrante, de garantir de ne pas égarer le récipient doseur 13 d'eau, tout en remplissant une fonction de guidage lors de l'approche du couvercle principal 12 sur la cuve 2 pour fermer l'enceinte 25.

Avantageusement, le logement 19 central présente une profondeur permettant de loger presque intégralement le récipient doseur 13 d'eau, de sorte qu'au maximum 20% de la hauteur du récipient doseur 13 d'eau dépasse de la surface du couvercle principal 12 quand le récipient doseur 13 d'eau est disposé dans le logement 19. Avantageusement encore, le récipient doseur 13 d'eau comporte une une poignée de préhension 22 dépassant de la surface du couvercle principal 12 quand le récipient doseur 13 d'eau est disposé dans le logement 19. Avantageusement encore, le récipient doseur 13 d'eau présente un bec verseur 32.

Le fonctionnement de l'appareil électrique de chauffage d'aliments à la vapeur va maintenant être explicité.

L'utilisateur peut mettre en place le panier 5 portant les pots 3 dans la cuve 2. De préférence les pots 3 sont fermés par les couvercles 4. Le réservoir d'eau 14 est rempli de la bonne quantité d'eau grâce au récipient doseur 13 d'eau, par un versement par le haut au niveau de la partie centrale de l'appareil, par l'espace central de remplissage 7. Ensuite, le couvercle principal 12 est fermé et l'appareil est mis en route. Le moyen chauffant 15 provoque la rapide évaporation de l'eau présente dans le réservoir d'eau 14. La vapeur générée se répand dans le volume de l'enceinte 25, notamment autour des pots 3 disposés dans le panier 5. La chaleur transmise à la préparation comprise dans les pots 3 permet la fabrication des yaourts.

Le bon dosage de la quantité d'eau utilisée dans le cycle de fonctionnement de l'appareil est important puisque la température finale obtenue à l'intérieur de l'appareil dépend de la quantité d'eau évaporée. Ainsi, le récipient doseur 13 d'eau permet à un utilisateur d'obtenir facilement et sans erreur cette bonne quantité d'eau. Le logement 19 prévu pour le récipient doseur 13 d'eau est important puisqu'il favorise son rangement et son non égarement, en plus de son accessibilité conviviale et facile favorisant son utilisation systématique, évitant par exemple le recours à tout autre récipient avec lequel la quantité d'eau versée serait plus aléatoire, ou simplement l'oubli de verser l'eau avant le lancement du cycle de chauffage ou cuisson.

En complément, le réservoir d'eau 14 est formé par une dépression centrale du fond 16 de la cuve 2. Le moyen chauffant 15 est logé dans ladite dépression centrale. La dépression centrale est entourée par une zone annulaire du fond 16 séparée du réservoir d'eau 14 par un seuil 21. Cette géométrie remplit une fonction de trop plein d'eau, qui permet une évacuation latérale automatique de toute quantité d'eau qui serait versée en trop, par un débordement naturel d'un tel éventuel trop plein d'eau et sa circulation vers la zone annulaire du fond 16. De plus, ladite zone annulaire du fond 16 présente une inclinaison vers le bas en direction de la périphérie de sorte à favoriser l'écoulement de l'eau qui s'y trouverait vers la paroi latérale de la cuve 2, que ce soit l'eau versée en trop et débordant du réservoir d'eau 14 ou l'eau condensée au cours du fonctionnement de l'appareil, pour éviter son retour dans le réservoir d'eau 14 ou à proximité du moyen chauffant 15, qui entraînerait une nouvelle évaporation qui pourrait fausser la maîtrise du chauffage mis en oeuvre au sein de l'appareil en élevant la température de manière intempestive. En remarque, le couvercle principal 12 présente une forme avantageusement similaire à celle du fond 16, inclinée vers le bas vers sa périphérie, ce qui remplit aussi une fonction de circulation des eaux de condensation vers la paroi latérale de la cuve 2, en complémentarité du fond 16 de la cuve 2.

Selon une caractéristique avantageuse de l'invention, les pots 3 contenant la préparation de yaourt sont répartis de manière symétrique et homogène autour du moyen chauffant 15, grâce à leur emplacement précis à l'aide du panier 5. Cela permet d'obtenir le même résultat dans chaque pot 3. Ensuite, le fait qu'aucune partie de pot 3 ne soit directement superposée au moyen chauffant 15 permet d'éviter un résultat non homogène au sein d'un même pot 3. En effet, comme cela apparaît clairement sur les figures et plus particulièrement sur la figure 2, les pots 3 sont disposés selon un positionnement annulaire autour du moyen chauffant 15 positionné au centre du fond 16 de la cuve 2, sans venir, même partiellement, au-dessus du moyen chauffant 15. Cette géométrie favorise l'obtention de sensiblement la même température intérieure au sein de chaque pot 3 et l'obtention d'un yaourt homogène dans chaque pot 3.

Enfin, la structure ajourée du panier 5 permet la circulation de la vapeur sur toute la périphérie de chaque pot 3 et garantit un transfert thermique à la fois homogène et optimal avec les pots 3. En remarque, le panier 5 est positionné dans l'enceinte 25 de sorte que le moyen de support inférieur 8 des pots se trouve au-dessus et à distance du fond 16 de la cuve 2, laissant un espace libre qui permet à la vapeur de circuler aussi sous les pots 3. Pour cela, le panier 5 comprend des organes d'appui prévus pour reposer sur un rebord 20 du volume prévu pour le positionnement du panier 5. Ainsi le panier 5 repose au-dessus et à distance du fond 16 comportant le réservoir d'eau 14 associé au moyen chauffant 15. Sur le mode d'exécution représenté, ces organes d'appui correspondent aux moyens extérieurs de retenue latérale 9, qui remplissent donc une double fonction. Tel que visible sur la figure 1, le rebord 20 appartient à la cuve 2. De plus, le fait que le réservoir d'eau 14 se trouve sous le niveau inférieur du fond 16 de la cuve 2 comprenant les pots 3 est un second facteur favorisant la circulation de la vapeur sous les pots 3. Enfin, la circulation de la vapeur est aussi favorisée sur les parois latérales des pots 3, par la structure ajourée du panier 5 au niveau des parois latérales des pots 3, comme cela a été explicité auparavant. Notamment, la structure ajourée de la paroi intérieure 11 du panier 5, particulièrement visible sur la figure 4, favorise le passage de la vapeur depuis l'espace central de remplissage 7 jusqu'aux parois latérales des pots 3.

Ainsi, la solution décrite présente les avantages suivants :
- l'utilisation d'un panier amovible au sein de l'appareil permet le transport aisé des différents pots en phase de préparation et en phase finale du fonctionnement de l'appareil;
- le panier garantit un positionnement optimal des différents pots au sein de l'appareil;
- le panier permet le remplissage en eau de l'appareil après son positionnement au sein de l'appareil;
- le panier assure aussi, en combinaison avec les autres caractéristiques de l'appareil, une circulation optimale et homogène de la vapeur autour de toute la surface des pots, ce qui permet d'obtenir une température intérieure constante dans chaque pot et un résultat homogène ;
- l'évacuation des condensats vers la partie extérieure l'appareil ainsi que l'emplacement des pots dans le panier permettent, outre la maîtrise des échanges thermiques, l'obtention de pots secs en fin de fonctionnement de l'appareil, ce qui est très convivial pour l'utilisateur qui n'a pas le désagrément que causerait la sensation désagréable de l'extraction de pots mouillés de l'appareil de chauffage en fin de fonctionnement et la nécessité de les essuyer manuellement.

L'invention concerne ainsi également un appareil électrique de chauffage d'aliments à la vapeur ou un ustensile de cuisson comprenant un volume prévu pour le positionnement du panier 5, le volume prévu pour le positionnement du panier 5 étant formé par l'enceinte 25.

Bien entendu, l'invention ne se limite pas au mode d'exécution décrit ci-dessus. Notamment, un panier 5 pouvant contenir neuf pots 3 a été illustré mais il est bien évident qu'un tel panier selon le même concept pourrait contenir tout autre nombre de pots. D'autre part, les emplacements 33 aménagés sur ce panier 5 ont été illustrés pour recevoir des pots en verre cylindriques. Toutefois, tout autre format pourrait aussi être envisagé et l'invention s'applique à tout panier pouvant supporter n'importe quel réceptacle pour aliments à chauffer ou cuire, réceptacle qui peut se trouver dans d'autres matériaux, comme du plastique par exemple. L'organe de préhension central 6 et l'espace central de remplissage 7 pourraient aussi présenter toute autre géométrie. Enfin, le panier 5 pourrait présenter toute autre structure ajourée que celle représentée.

L'invention a été illustrée dans le cadre d'une yaourtière. La yaourtière illustrée pourrait se présenter sous une autre forme. Par exemple, elle peut être obtenue par une association différente d'un socle et d'une cuve surmontée d'un couvercle. Le volume de chauffage ou cuisson peut être formé par tout autre élément que l'enceinte décrite, plus généralement par tout boîtier formant une enceinte adaptée pour recevoir les pots ou réceptacles à chauffer. De plus, ce boîtier ne comprend pas nécessairement un couvercle mais la yaourtière peut être formée par toute autre superposition de différents éléments. Le couvercle principal 12 pourrait être dépourvu de logement 19 prévu pour recevoir le récipient doseur 13, l'espace central de remplissage 7 pouvant alors former le logement recevant le récipient doseur 13 d'eau.

Naturellement, le concept décrit précédemment pourrait aussi être avantageusement exploité dans tout autre appareil électrique générant la fermentation d'un aliment, ou plus généralement un chauffage d'aliments, comme un cuiseur vapeur, un cuiseur à riz, ou un cuiseur électrique sous pression. De plus, le panier selon le concept de l'invention peut aussi être adapté pour un ustensile de cuisson, comme un récipient tel qu'une poêle ou une casserole, voire un autocuiseur pour cuire sous pression. Le panier 5 pour appareil électrique de chauffage d'aliments à la vapeur ou pour ustensile de cuisson forme un support comprenant l'organe de préhension 6 central entouré par plusieurs emplacements 33 prévus pour recevoir des réceptacles.

La présente invention n'est nullement limitée aux exemples de réalisation décrits, mais englobe de nombreuses modifications dans le cadre des revendications.

## Revendications

1. Panier (5) pour appareil électrique de chauffage d'aliments à la vapeur ou pour ustensile de cuisson, formant un support comprenant un organe de préhension (6) central entouré par plusieurs emplacements (33) prévus pour recevoir des réceptacles, **caractérisé en ce que** l'organe de préhension (6) central ménage un espace central de remplissage (7).

2. Panier (5) selon la revendication 1, **caractérisé en ce que** l'organe de préhension (6) central est apte à la saisie du panier (5) d'une seule main.

3. Panier (5) selon l'une des revendications 1 ou 2, **caractérisé en ce que** l'organe de préhension (6) central comprend deux zones de préhension (26) disposées de part et d'autre de l'espace central de remplissage (7).

4. Panier (5) selon la revendication 3, **caractérisé en ce que** chacune des deux zones de préhension (26) est accessible par une approche du côté des emplacements (33).

5. Panier (5) selon l'une des revendications 3 ou 4, **caractérisé en ce que** chacune des deux zones de préhension (26) présente une surface inférieure de préhension.

6. Panier (5) selon l'une des revendications 3 à 5, **caractérisé en ce que** chacune des deux zones de préhension (26) présente une surface latérale de préhension.

7. Panier (5) selon l'une des revendications 3 à 6, **caractérisé en ce qu'**au moins une des deux zones de préhension (26) présente un renfoncement (27) creusé vers l'espace central de remplissage (7).

8. Panier (5) selon l'une des revendications 1 à 7, **caractérisé en ce que** l'espace central de remplissage (7) est apte au positionnement en son sein d'un récipient doseur (13) d'eau.

9. Panier (5) selon l'une des revendications 1 à 8, **caractérisé en ce qu'**il est ajouré pour favoriser le passage de la vapeur entre l'espace central de remplissage (7) et les emplacements (33).

10. Appareil électrique de chauffage d'aliments à la vapeur ou ustensile de cuisson, **caractérisé en ce qu'**il comprend un volume prévu pour le positionnement d'un panier (5) selon l'une des revendications 1 à 9.

11. Appareil électrique de chauffage d'aliments à la vapeur ou ustensile de cuisson selon la revendication 10, **caractérisé en ce que** le volume prévu pour le positionnement d'un panier (5) est surmonté par un couvercle principal (12).

12. Appareil électrique de chauffage d'aliments à la vapeur selon l'une des revendications 10 ou 11, **caractérisé en ce que** le panier (5) repose au-dessus et à distance d'un fond (16) comportant un réservoir d'eau (14) associé à un moyen chauffant (15).

13. Appareil électrique de chauffage d'aliments à la vapeur selon la revendication 12, **caractérisé en ce que** le réservoir d'eau (14) est formé par une dépression centrale du fond (16), **en ce que** le moyen chauffant (15) est logé dans ladite dépression centrale, **en ce que** la dépression centrale est entourée par une zone annulaire du fond (16) séparée du réservoir d'eau (14) par un seuil (21), et **en ce que** ladite zone annulaire du fond (16) présente une inclinaison vers le bas en direction de la périphérie.

14. Appareil électrique de chauffage d'aliments à la vapeur selon l'une des revendications 12 ou 13, **caractérisé en ce que** les emplacements (33) du panier (5) sont disposés en périphérie du réservoir d'eau (14) lorsque le panier (5) est agencé dans ledit volume.

15. Appareil électrique de chauffage d'aliments à la vapeur selon l'une des revendications 10 à 14, **caractérisé en ce qu'**il est une yaourtière ménagère.

## Patentansprüche

1. Korb (5) für ein elektrisches Gerät zum Dampfgaren von Speisen oder für ein Kochutensil, der einen Träger bildet, welcher ein zentrales Greifelement (6) umfasst, das von mehreren Stellflächen (33) umgeben ist, die für die Aufnahme von Behältern vorgesehen sind, **dadurch gekennzeichnet, dass** das zentrale Greifelement (6) eine Aussparung für einen zentralen Füllraum (7) aufweist.

2. Korb (5) nach Anspruch 1, **dadurch gekennzeichnet, dass** das zentrale Greifelement (6) für das Greifen des Korbes (5) mit einer Hand konzipiert ist.

3. Korb (5) nach einem der Ansprüche 1 oder 2, **dadurch gekennzeichnet, dass** das zentrale Greifelement (6) zwei Greifbereiche (26) umfasst, die beidseits des zentralen Füllraums (7) angeordnet sind.

4. Korb (5) nach Anspruch 3, **dadurch gekennzeichnet, dass** die beiden Greifbereiche (26) seitlich von den Stellflächen (33) aus zugänglich sind.

5. Korb (5) nach einem der Ansprüche 3 oder 4, **dadurch gekennzeichnet, dass** beide Greifbereiche (26) eine untere Grifffläche aufweisen.

6. Korb (5) nach einem der Ansprüche 3 bis 5, **dadurch gekennzeichnet, dass** beide Greifbereiche (26) eine seitliche Grifffläche aufweisen.

7. Korb (5) nach einem der Ansprüche 3 bis 6, **dadurch gekennzeichnet, dass** mindestens einer der beiden Greifbereiche (26) eine Vertiefung (27) aufweist, die zum zentralen Füllraum (7) hin ausgerichtet ist.

8. Korb (5) nach einem der Ansprüche 1 bis 7, **dadurch gekennzeichnet, dass** der zentrale Füllraum (7) dafür ausgelegt ist, einen Wasserdosierbehälter (13) aufzunehmen.

9. Korb (5) nach einem der Ansprüche 1 bis 8, **dadurch gekennzeichnet, dass** er Durchbrüche aufweist, um den Dampfdurchlass zwischen dem zentralen Füllraum (7) und den Stellflächen (33) zu unterstützen.

10. Elektrisches Gerät zum Dampfgaren von Speisen oder als Kochutensil, **dadurch gekennzeichnet, dass** es einen Raum umfasst, der für die Positionierung eines Korbes (5) nach den Ansprüchen 1 bis 9 vorgesehen ist.

11. Elektrisches Gerät zum Dampfgaren von Speisen oder als Kochutensil nach Anspruch 10, **dadurch gekennzeichnet, dass** über dem für die Positionierung eines Korbes (5) vorgesehenen Raum eine Hauptabdeckung (12) angebracht ist.

12. Elektrisches Gerät zum Dampfgaren nach einem der Ansprüche 10 oder 11, **dadurch gekennzeichnet, dass** der Korb (5) in einem gewissen Abstand über dem Boden (16) gelagert ist, der einen Wasserbehälter (14) umfasst, welcher an ein Heizelement (15) angeschlossen ist.

13. Elektrisches Gerät zum Dampfgaren von Speisen nach Anspruch 12, **dadurch gekennzeichnet, dass** der Wasserbehälter (14) als zentrale Vertiefung des Bodens (16) ausgebildet ist, wobei das Heizelement (15) in dieser zentralen Vertiefung angebracht und die zentrale Vertiefung von einem ringförmigen Bereich des Bodens (16) umgeben ist, der von dem Wasserbehälter (14) durch eine Abstufung (21) abgetrennt wird, und wobei der genannte ringförmige Bereich des Bodens (16) in Richtung des Außenrands schräg abfällt.

14. Elektrisches Gerät zum Dampfgaren von Speisen nach einem der Ansprüche 12 oder 13, **dadurch gekennzeichnet, dass** die Stellflächen (33) des Korbes (5) am Rand des Wasserbehälters (14) angeordnet sind, wenn der Korb (5) in den genannten Raum eingestellt wird.

15. Elektrisches Gerät zum Dampfgaren von Speisen nach einem der Ansprüche 10 bis 14, **dadurch gekennzeichnet, dass** es sich um einen Joghurtbereiter für Haushaltszwecke handelt.

## Claims

1. Basket (5) for electrical appliance for heating food with steam or for cooking utensil, forming a support comprising a central gripping member (6) surrounded by several compartments (33) for receiving containers, **characterised in that** the central gripping member (6) forms a central filling space (7).

2. Basket (5) according to claim 1, **characterised in that** the central gripping member (6) is designed so that the basket (5) can be picked up with one hand.

3. Basket (5) according to claim 1 or 2, **characterised in that** the central gripping member (6) comprises two gripping areas (26) arranged on either side of the central filling space (7).

4. Basket (5) according to claim 3, **characterised in that** each of the two gripping areas (26) can be accessed from the side of the compartments (33).

5. Basket (5) according to claim 3 or 4, **characterised in that** each of the two gripping areas (26) has a lower gripping surface.

6. Basket (5) according to one of claims 3 to 5, **characterised in that** each of the two gripping areas (26) has a side gripping surface.

7. Basket (5) according to one of claims 3 to 6, **characterised in that** at least one of the two gripping areas (26) has a recess (27) hollowed out towards the central filling space (7).

8. Basket (5) according to one of claims 1 to 7, **characterised in that** the central filling space (7) is adapted to hold a water metering container (13).

9. Basket (5) according to one of claims 1 to 8, **characterised in that** it is perforated to facilitate the passage of steam between the central filling space (7) and the locations (33).

10. Electrical appliance for heating food with steam or cooking utensil, **characterised in that** it comprises a volume provided to hold a basket (5) according to one of claims 1 to 9.

11. Electrical appliance for heating food with steam or cooking utensil, according to claim 10, **characterised in that** the volume provided for holding a basket (5) is surmounted by a main cover (12).

12. Electrical appliance for heating food with steam according to claim 10 or 11, **characterised in that** the basket (5) rests above and at a distance from a bottom (16) having a water tank (14) associated with a heating means (15).

13. Electrical appliance for heating food with steam according to claim 12, **characterised in that** the water tank (14) is formed by a central depression of the bottom (16) and **in that** the heating means (15) is housed in said central depression, **in that** the central depression is surrounded by an annular region of the bottom (16) separated from the water tank (14) by a threshold (21), and **in that** said annular region of the bottom (16) has a downward inclination towards the periphery.

14. Electrical appliance for heating food with steam according to claim 12 or 13, **characterised in that** the locations (33) of the basket (5) are arranged on the periphery of the water tank (14) when the basket (5) is arranged in said volume.

15. Electrical appliance for heating food with steam according to one of claims 10 to 14, **characterised in that** it is a home yoghurt maker.
